# EUROPEAN PATENT APPLICATION

(11) **EP 4 769 924 A1**
(43) Date of publication of application: **01.07.2026**
(21) Application number: 25218678.8
(22) Date of filing: 26.11.2025
(51) Int. Cl.: H02M 3/156, H02M 7/48, H02M 1/00, H02J 3/38, H02M 1/32, H02M 3/158

(54) **CONTROL DEVICE, COMPUTER-READABLE STORAGE MEDIUM, MODULE-LEVEL POWER ELECTRONICS APPARATUS, NEW ENERGY SYSTEM, POWER CONVERTER, AND CONTROL METHOD FOR POWER CONVERTER**

(30) Priority: 27.12.2024 CN 202411960879
(71) Applicant: Sungrow (Shanghai) Co., Ltd., Shanghai 201107 (CN)
(72) Inventor: YANG, Hui, Shanghai (CN); SHENG, Guodong, Shanghai (CN); CHEN, Shangwen, Shanghai (CN); HE, Yi, Shanghai (CN); WANG, Delin, Shanghai (CN); ZHANG, Gan, Shanghai (CN)
(74) Representative: Zacco Norway AS

(57) **Abstract**

A control device, a computer-readable storage medium, a module-level power electronics apparatus, a new energy system, a power converter, and a control method for a power converter are provided, relating to the technical field of power electronics. The power converter, in a case that the power supply branch connected to the power converter includes at least two power supply strings connected in parallel, regulates a voltage of at least one of the power supply strings, and determines whether input voltages of module-level power electronics apparatuses in the corresponding power supply branch change. For a module-level power electronics apparatus, in normal cases, the input voltage of the module-level power electronics apparatus is constant; and in a case that an input open-circuit fault occurs for the module-level power electronics apparatus, the input voltage of the module-level power electronics apparatus changes due to an inter-string voltage difference between the power supply string where the module-level power electronics apparatus is arranged and other power supply strings connected in parallel to the power supply string. Thus, in a case that an input voltage of a module-level power electronics apparatus changes, it may be determined that an input open-circuit fault occurs for the module-level power electronics apparatus, thereby determining the input open-circuit fault.

## Description

### FIELD

The present disclosure relates to the technical field of power electronics, and in particular to a control device, a computer-readable storage medium, a module-level power electronics apparatus, a new energy system, a power converter, and a control method for a power converter.

### BACKGROUND

At present, in connecting a power converter to a direct-current (DC) power supply such as a photovoltaic module or a battery, a module-level power electronics (MLPE) apparatus, such as a shutdown device or an optimizer, is usually adopted for connecting to the DC power supply.

An input terminal of the MLPE apparatus may be connected to one or more DC power supplies, and the MLPE apparatus may perform functions such as rapid shutdown, monitoring or power optimization of the connected DC power supplies. MLPE apparatuses may be connected in series through output terminals, thereby forming a power supply string including the MLPE apparatuses and DC power supplies corresponding to the MLPE apparatuses.

In a case that an open-circuit fault occurs between an MLPE apparatus and a DC power supply corresponding to the MLPE apparatus in the power supply string and there is a voltage across the power supply string, the MLPE apparatus may have an overvoltage risk, which may result in device damage. Therefore, how to determine an open-circuit fault is a technical problem to be urgently solved.

### SUMMARY

In view of this, a power converter, and a control method for a power converter are provided according to the present disclosure, to determine an input open-circuit fault of the MLPE apparatus. Following technical solutions are provided.

In a first aspect, a power converter is provided according to the present disclosure. The power converter includes a main circuit and a controller. A direct-current (DC) side of the main circuit serves as a DC side of the power converter and is connected to at least one power supply branch. The at least one power supply branch includes at least two power supply strings connected in parallel. Each of the at least one power supply strings includes: at least two module-level power electronics (MLPE) apparatuses and DC power supplies. The at least two MLPE apparatuses are connected in series through output terminals of the at least two MLPE apparatuses, and the DC power supplies are connected to input terminals of the at least two MLPE apparatuses. The main circuit is configured to be controlled by the controller. The controller is configured to: regulate a voltage of at least one of the power supply strings, and determine that an input open-circuit fault occurs for an MLPE apparatus of which an input voltage changes in the at least one power supply branch.

In a second aspect, a control method for a power converter is provided according to the present disclosure. A direct-current (DC) side of the power converter is connected to at least one power supply branch. The at least one power supply branch includes at least two power supply strings connected in parallel. Each of the at least two power supply strings includes: at least two module-level power electronics (MLPE) apparatuses and DC power supplies. The at least two MLPE apparatuses are connected in series through output terminals of the at least two MLPE apparatuses, and the DC power supplies are connected to input terminals of the at least two MLPE apparatuses. The control method includes: regulating a voltage of at least one of the power supply strings; acquiring input voltages of the MLPE apparatuses; and determining, in a power supply branch in which the voltage of the at least one of the power supply strings is regulated, that an input open-circuit fault occurs for an MLPE apparatus of which an input voltage changes.

With the above-described technical solutions, the power converter according to the present disclosure regulates, in a case that the power supply branch connected to the power converter includes at least two power supply strings connected in parallel, a voltage of at least one of the power supply strings, and determines whether input voltages of MLPE apparatuses in the corresponding power supply branch change. For an MLPE apparatus, in normal cases, the input voltage of the MLPE apparatus is constant; and in a case that an input open-circuit fault occurs for the MLPE apparatus, the input voltage of the MLPE apparatus changes due to an inter-string voltage difference between the power supply string where the MLPE apparatus is arranged and other power supply strings connected in parallel to the power supply string. Thus, in a case that an input voltage of an MLPE apparatus changes, it may be determined that an input open-circuit fault occurs for the MLPE apparatus, thereby determining the input open-circuit fault.

### BRIEF DESCRIPTION OF THE DRAWINGS

The above and other features, advantages and aspects of the embodiments of the present disclosure will be more apparent in conjunction with the drawings and with reference to the following embodiments. The same or similar reference numerals throughout the drawings represent the same or similar elements. It should be understood that the drawings are schematic and the components and elements are unnecessarily drawn to scale.
FIG. 1 is a schematic diagram showing a connection between a power converter and a power supply branch according to an embodiment of the present disclosure;
FIG. 2 is a schematic diagram showing a circuit of a power converter connecting to an MLPE apparatus being of an optimizer according to an embodiment of the present disclosure;
FIG. 3 is a schematic structural diagram of a power branch connected to a power converter according to an embodiment of the present disclosure;
FIG. 4 is a schematic diagram showing waveforms of an voltage of a power supply string in a case of a power converter performing voltage control in a gradient manner according to an embodiment of the present disclosure;
FIG. 5 is a schematic diagram showing waveforms of an voltage of a power supply string in a case of a power converter performing voltage control in an alternating gradient manner according to an embodiment of the present disclosure;
FIG. 6 is a schematic structural diagram of a main circuit of a power converter according to an embodiment of the present disclosure;
FIG. 7 is a schematic structural diagram of a main circuit of a power converter according to another embodiment of the present disclosure;
FIG. 8 is a flowchart of a control method for a power converter according to an embodiment of the present disclosure;
FIG. 9 is a flowchart of a control method for a power converter according to another embodiment of the present disclosure;
FIG. 10 is a schematic structural diagram of a control device according to an embodiment of the present disclosure;
FIG. 11 is a schematic structural diagram of an MLPE apparatus according to an embodiment of the present disclosure; and
FIG. 12 is a schematic structural diagram of a new energy system according to an embodiment of the present disclosure.

### DETAILED DESCRIPTION

Embodiments of the present disclosure are described below in conjunction with the drawings of the present disclosure. The terms in the embodiments of the present disclosure are merely for the purpose of explaining the embodiments of the present disclosure, rather than limiting the present disclosure.

The embodiments of the present disclosure are described in conjunction with the drawings hereinafter. It is apparent that the described embodiments are only a part rather than all of the embodiments according to the present disclosure. Any other embodiments obtained by those skilled in the art based on the embodiments of the present disclosure without any creative effort fall within the protection scope of the present disclosure. Those skilled in the art should understand that the technical solutions jin the embodiments of the present disclosure are applicable to similar technical problems with the development of technology and the emergence of different application scenarios.

In the specification, the claims and the drawings of the present disclosure, terms such as "first" and "second" are merely for distinguishing similar objects rather than describing a specific order or sequence. It should be understood that the terms used in this way may be interchanged in appropriate cases, and the terms are used to distinguish objects with the same attributes in the embodiments of the present application in describing the objects. In addition, the terms "include" and "comprise" and any variations thereof are intended to be non-exclusive, so that a process, method, system, product or device including a series of units includes not only the units but also other units that are not enumerated, or also include units inherent in the process, method, product or device.

A power converter is provided according to an embodiment of the present disclosure, to determine an input open-circuit fault of a module-level power electronics (MLPE) apparatus.

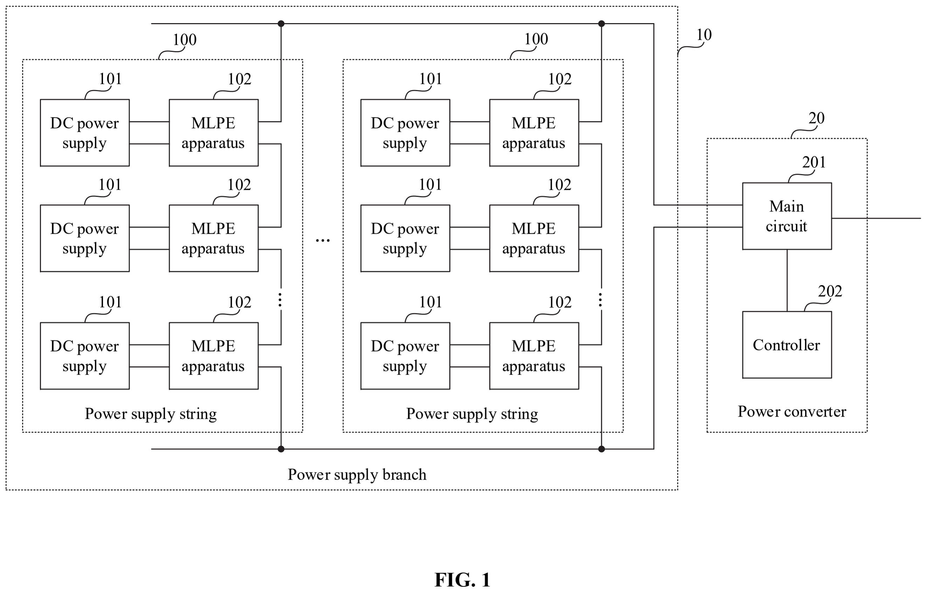

Referring to FIG. 1, the power converter 20 includes a main circuit 201 and a controller 202.

A direct-current (DC) side of the main circuit 201 serves as a DC side of the power converter 20, and is connected to at least one power supply branch 10 (FIG. 1 shows an example of one power supply branch). The power supply branch 10 includes at least two power supply strings connected in parallel. Each of the power supply strings 10 includes: at least two MLPE apparatuses 102 connected in series through output terminals of the two MLPE apparatuses 102 and DC power supplies 101 connected to input terminals of the two MLPE apparatuses 102. That is, in a power supply string 100, MLPE apparatuses 102 are sequentially connected in series through output terminals of MLPE apparatuses 102, and two terminals of the MLPE apparatuses 102 connected in series serves as two terminals of the power supply string 100. An input terminal of each of the MLPE apparatuses 102 may be connected to at least one DC power supply 101. FIG. 1 shows an example in which the input terminal of each of the MLPE apparatuses 102 is connected to one DC power supply 101. In a case that an input terminal of an MLPE apparatus 102 is connected to multiple DC power supply 101, the DC power supplies 101 may be connected in series and/or in parallel according to the application environment, which falls in the protection scope of the present disclosure.

In practice, the DC power supply 101 may be a photovoltaic module or an energy storage battery. It should be noted that the naming of the input terminals and the output terminals of the MLPE apparatuses 102 in the present disclosure is merely for distinguishing two sides of the MLPE apparatuses 102 and does not limit a power transmission direction of the MLPE apparatuses 102. For example, in a case that the DC power supply 101 is an energy storage battery, the DC power supply 101 may externally discharge through the main circuit 201 and the corresponding MLPE apparatus 102, or may obtain external charging power through the MLPE apparatus 102 and the main circuit 201.

The main circuit 201 is controlled by the controller 202. That is, the controller 202 controls the main circuit 201 to operate. The specific operation control process may refer to the conventional technology, and is not repeated herein.

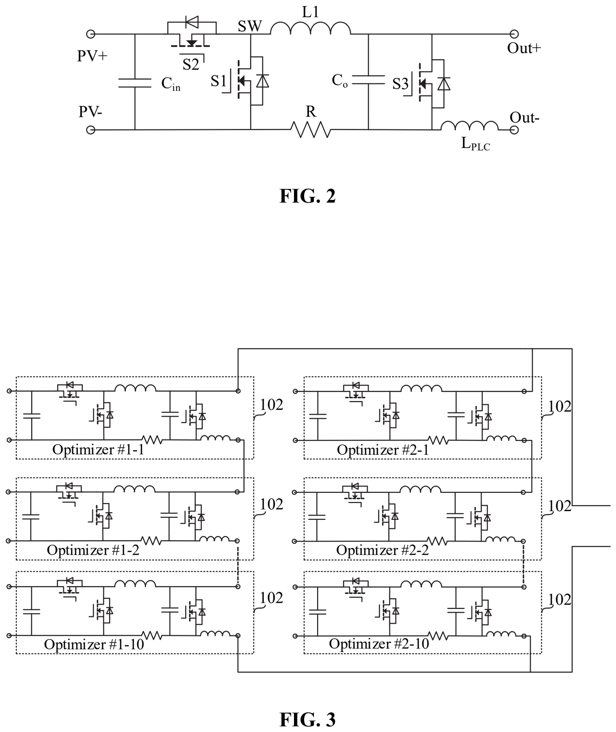

For the structure shown in FIG. 1, in a case that an MLPE apparatus 102 is disconnected from a corresponding DC power supply 101, that is, the MLPE apparatus 102 has an input open-circuit fault, the MLPE apparatus 102 is to be unable to provide a normal output voltage due to lack of power supply, resulting in backflows of other power supply strings 100 on the output terminal of the MLPE apparatus 102. Thus, the output terminal of the MLPE apparatus 102 bears a corresponding backflow voltage. The MLPE apparatus 102 may be a shutdown device or an optimizer. In a case that the MLPE apparatus 102 is a Buck circuit (as shown in FIG. 2) and operates in an operation mode, the MLPE apparatus 102 may perform reverse Boost operation due to operations of a switching transistor in the MLPE apparatus 102, resulting in a sharp increase in the input voltage of the MLPE apparatus 102. For the structure shown in FIG. 2, the input terminal (PV+ represents a positive electrode and PV- represents a negative electrode shown in FIG. 2,) of the MLPE apparatus 102 or a terminal (which is represented by SW shown in FIG. 2) of a switching transistor S2 in a power transmission circuit of the MLPE apparatus 102may have an overvoltage risk, which may damage components at the input terminal of the MLPE apparatus 102.

Therefore, in the embodiment, the controller 202 regulates a voltage of at least one of the power supply strings, and then determines that an input open-circuit fault occurs for an MLPE apparatus 102 of which an input voltage changes in the corresponding power supply branch, thereby determine the input open-circuit fault.

The specific operations are described below in detail.

In a case that a voltage of a power supply string 100 is regulated, an inter-string voltage difference is generated between the power supply string 100 and other power supply strings 100 connected in parallel to the power supply string 100. The inter-string voltage difference is a difference between the regulated voltage of the power supply string 100 and the voltages of other power supply strings 100 connected in parallel to the power supply string 100. For example, in a case that the voltage of the power supply string 100 is reduced, the inter-string voltage difference is a value at which the voltage of the power supply string 100 is lower than the voltages of the other power supply strings 100 connected in parallel to the power supply string 100; and in a case that the voltage of the power supply string 100 is raised, the inter-string voltage difference is a value at which the voltage of the power supply string 100 is higher than the voltages of the other power supply strings 100 connected in parallel to the power supply string 100

In a case that an MLPE apparatus 102 is normally connected to a corresponding DC power supply 101, the input voltage of the MLPE apparatus 102 is equal to the voltage of the DC power supply 101. After the inter-string voltage difference is generated and voltages at various positions become stable, the input voltage of the MLPE apparatus 102 restores to the voltage of the MLPE apparatus 102 before the inter-string voltage difference is generated, that is, the input voltage of the MLPE apparatus 102 is constant and remains unchanged before and after the inter-string voltage difference is generated.

In a case that an MLPE apparatus 102 is disconnected from a corresponding DC power supply 101, that is, an input open-circuit fault occurs for the MLPE apparatus 102. If the MLPE apparatus 102 is a shutdown device, a switch in the MLPE apparatus 102 is closed in response to the MLPE apparatus 102 operates in a standby mode or in an operation mode, so that the input voltage of the MLPE apparatus 102 is equal to the output voltage of the MLPE apparatus 102. If the MLPE apparatus 102 is an optimizer, especially in response to a switching transistor in an power transmission circuit of the MLPE apparatus 102 is configured as an anti-parallel diode or a body diode, the anti-parallel diode or the body diode in the power transmission circuit of the MLPE apparatus 102 is conducted, for example, the body diode used as the switching transistor S2 shown in FIG. 2 is conducted, so that the input voltage of the MLPE apparatus 102 is equal to the output voltage of the MLPE apparatus 102. If the MLPE apparatus 102 is a Buck circuit and operates in an operation mode, the MLPE apparatus 102 may perform reverse Boost operation due to operations of a switching transistor in the MLPE apparatus 102, so that the input voltage of the MLPE apparatus 102 is greater than the output voltage of the MLPE apparatus 102. Therefore, for an MLPE apparatus 102 having a input open-circuit fault, the input voltage of the MLPE apparatus 102 changes with the output voltage of the MLPE apparatus 102.

In an embodiment, for an MLPE apparatus 102 having an input open-circuit fault, after the inter-string voltage difference is generated and voltages at various positions become stable, in a case that the voltage of the power supply string 100 where the MLPE apparatus 102 is arranged is lower than a voltage of any one of the power supply strings 100 connected in parallel to the power supply string 100, the output voltage of the MLPE apparatus 102 increases from the backflow voltage before the inter-string voltage difference is generated to the inter-string voltage difference, and the input voltage of the MLPE apparatus 102 increases from the backflow voltage to a voltage greater than or equal to the inter-string voltage difference; and in a case that the voltage of the power supply string 100 where the MLPE apparatus 102 is arranged is higher than the voltages of all the other power supply strings 100 connected in parallel to the power supply string 100, the backflow voltage borne by the output terminal of the MLPE apparatus 102 changes to zero, and the input voltage of the MLPE apparatus 102 changes from the backflow voltage to zero.

Therefore, the power converter 20 according to the embodiments regulate, in a case that the power supply branch 10 connected to the power converter 20 includes at least two power supply strings 100 connected in parallel, a voltage of at least one of the power supply strings 100, and determines whether input voltages of MLPE apparatuses 102 in the corresponding power supply branch 10 change. For an MLPE apparatus 102, in normal cases, the input voltage of the MLPE apparatus 102 is constant; and in a case that an input open-circuit fault occurs for the MLPE apparatus 102, the input voltage of the MLPE apparatus 102 changes due to an inter-string voltage difference between the power supply string 100 where the MLPE apparatus 102 is arranged and other power supply strings 100 connected in parallel to the power supply string 100. Thus, in a case that an input voltage of an MLPE apparatus 102 changes, it may be determined that an input open-circuit fault occurs for the MLPE apparatus 102, thereby determining the input open-circuit fault.

Based on the above embodiments, the process of the power converter 20 determining an input open-circuit fault for an MLPE apparatus 102 is described in detail in an embodiment.

In an embodiment, in determining the input open-circuit fault, the controller 202 of the power converter 20 may regulate the voltage of the power supply string 100 by raising or reducing the voltage of the power supply string 100, as long as the inter-string voltage difference is generated in the corresponding power supply branch 10, which is not limited herein and falls within the protection scope of the present disclosure.

In addition, the controller 202 may be communicatively connected to all the MLPE apparatuses 102 and controls the MLPE apparatuses 102 to operate. In controlling the MLPE apparatuses 102, the controller 202 may regulate operation electrical parameters, such as output voltage, of the MLPE apparatuses 102. Thus, the controller 202 may regulate the output voltages of the MLPE apparatuses 102 to control the voltages of the power supply strings 100.

In an embodiment, the controller 202 may simultaneously perform a same regulation on output voltages of all MLPE apparatuses 102 in the power supply strings 100 to cause the voltages of the power supply strings 100 to change. For example, for a power supply string 100 including n MLPE apparatus 102 connected in series through output terminals of the n MLPE apparatuses 102, the controller 202 may simultaneously increase the output voltages of the n MLPE apparatus 102 in the power supply string 100 by a voltage value k1, then the voltage of the power supply string 100 may be normally increased by n*k1. In a case that x (where x represents a positive integer) MLPE apparatuses 102 in the power supply string 100 have an input open-circuit fault, the output voltages of the x MLPE apparatuses 102 cannot be increased, then the voltage of the power supply string 100 may be increased by (n-x)*k1. Alternatively, the controller 202 may simultaneously reduce the output voltages of the n MLPE apparatuses 102 in the power supply string 100 by a voltage value k2, then the voltage of the power supply string 100 may be normally reduced by n*k2. In a case that x MLPE apparatuses 102 in the power supply string 100 have an input open-circuit fault, the output voltages of the x MLPE apparatuses 102 cannot be reduced, then the voltage of the power supply string 100 may be increased by (n-x)*k2.

In a case that the MLPE apparatus 102 is a shutdown device, the output voltage of the MLPE apparatus 102 may be raised by controlling a switch in the MLPE apparatus 102 to be turned on, and the output voltage of the MLPE apparatus 102 may be reduced by controlling the switch in the MLPE apparatus 102 to be turned off. In a case that the MLPE apparatus 102 is an optimizer, the output voltage of the MLPE apparatus 102 may be raised or reduced by adjusting a duty cycle of a switching transistor in the MLPE apparatus 102, which is related to the circuit topology configured of the MLPE apparatus 102, may refer to the conventional technology, and is not repeated herein.

In practice, it may be determined how to regulate the voltage of the power supply string 100 according to current situations. For example, in a case that the power supply branch 10 currently has a high voltage, the voltage of the power supply string 100 may be reduced, for determining an input open-circuit fault; and in a case that the power supply branch 10 currently has a low voltage, the voltage of the power supply string 100 may be raised, for determining an input open-circuit fault. Therefore, how to regulate the voltage of the power supply string 100 depends on the application environments and is not limited herein, which falls within the protection scope of the present disclosure.

In addition, the controller 202 may determine whether an input voltage of an MLPE apparatus 102 changes by determining whether the input voltage of the MLPE apparatus 102 increases or decreases. For example, in a case that the voltage of the power supply string 100 at which the MLPE apparatus 102 having the input open-circuit fault is arranged is lower than a voltage of any one of the power supply strings 100 connected in parallel to the power supply string 100, the input voltage of the MLPE apparatus 102 changes from the backflow voltage to a voltage greater than or equal to the current inter-string voltage difference, that is, the input voltage of the MLPE apparatus 102 increases; and in a case that the voltage of the power supply string 100 at which the MLPE apparatus 102 having the input open-circuit fault is arranged is higher than the voltages of all the power supply strings 100 connected in parallel to the power supply string 100, the input voltage of the MLPE apparatus 102 changes from the backflow voltage to zero, that is, the input voltage of the MLPE apparatus 102 decreases.

It may be determined that, regardless of whether the input voltage of the MLPE apparatus 102 increases or decreases, an input open-circuit fault occurs for the MLPE apparatus 102 as long as the input voltage of the MLPE apparatus 102 is no longer constant at a previous voltage after stabilizing. It should be noted that in practice, considering the influence of detection accuracy and illumination amplitude during photovoltaic applications on sampling the input voltage of the MLPE apparatus 102, the input voltage of the MLPE apparatus 102 without the input open-circuit fault may have a certain fluctuation. That is, it may be determined that an input open-circuit fault occurs for an MLPE apparatus 102 of which the input voltage changes by more than a pre-determined threshold.

The fluctuation and the predetermined threshold may be determined according to actual situations and are not limited herein, as long as the predetermined threshold is greater than the amplitude of the fluctuation, which is fall within the protection scope of the present disclosure.

Based on the above embodiments, the process of the power converter 20 regulating the voltage of the corresponding power supply string 100 for determining the MLPE apparatus 102 having the input open-circuit fault is described in detail in an embodiment.

In an embodiment, the controller 202 may regulate voltages of all or part of the power supply strings 100 in the power supply branch 10. That is, assuming that an power supply branch 10 includes m power supply strings 100 connected in parallel where m represents an integer greater than 1, the controller 202 may regulate the voltages of all the m power supply strings 100 or may regulate the voltages of y power supply strings 100 in the power supply branch 10, where 1≤y<m.

In an embodiment, the controller 202 may regulate the voltages of all or part of the power supply strings 100 in the power supply branch 10 in a predetermined manner.

In an embodiment, the predetermined manner may include: a simultaneous regulation manner, a batch regulation manner, or a one-by-one regulation manner. It is assumed that the controller 202 may regulate voltages of five power supply strings 100. In the simultaneous regulation manner, the controller 202 may simultaneously regulate the voltages of the five power supply strings 100. In the batch regulation manner, the controller 202 may regulate voltages of two of the five power supply strings 100 firstly and then regulate voltages of the other three of the five power supply strings 100, or the controller 202 may regulate voltages with different batch numbers and quantities in each batch, which is not limited herein. In the one-by-one regulation manner, the controller 202 may regulate the voltages of the five power supply strings 100 one by one, without limiting the order of the power supply strings 100. In the batch regulation manner and the one-by-one regulation manner, after the currently regulated input voltages of the MLPE apparatus 102 become stable, the input voltages of the MLPE apparatus 102 may be regulated again for the comparison and determination of the input voltages of the MLPE apparatuses 102.

In simultaneously regulating the voltages of all the power supply strings 100 in the power supply branch 10, the voltage of the power supply string 100 where the MLPE apparatus 102 having the input open-circuit fault (which may be referred to as a faulty MLPE apparatus 102 for short) is arranged is lower than the voltages of other normal power supply strings 100 due to that the faulty MLPE apparatus 102 in the power supply string 100 fails to provide a normal output voltage, and the output terminal of the faulty MLPE apparatus 102 in the power supply string 100 bears a corresponding inter-string voltage difference. Thus, based on the change in the input voltage of the faulty MLPE apparatus 102, the input open-circuit fault is determined. In a case of more than one faulty MLPE apparatuses 102 in the power supply string 100, the output terminals of the faulty MLPE apparatuses 102 bear the inter-string voltage difference together, and the input voltages of the faulty MLPE apparatuses 102 change with a fluctuation greater than the normal fluctuation.

In an embodiment, in a case that all the power supply strings 100 in the power supply branch 10 include a same number of faulty MLPE apparatus 102, the voltage of the power supply strings 100 may be regulated in the batch regulation manner or in the one-by-one regulation manner, to ensure generating the inter-string voltage difference.

In an embodiment, the predetermined manner may include: performing at least two rounds of regulation. The at least two rounds of regulation may be performed in, but is not limited to, the simultaneous regulation manner, the batch regulation manner, and the one-by-one regulation manner. That is, multiple rounds of regulation may be performed on the voltage of the power supply strings 100. After each round of regulation, the input voltage of the faulty MLPE apparatus 102 changes accordingly. After multiple rounds of regulation, the input voltage of the faulty MLPE apparatus 102 change regularly, facilitating determining the input open-circuit fault, avoiding misjudgment, and improving determination accuracy. That is, in a case of determining that an input voltage of an MLPE apparatus 102 changes regularly with the regulated voltage of the corresponding power supply string 100, it may be determined that an input open-circuit fault occurs for the MLPE apparatus 102 rather than a misjudgment.

Referring to FIG. 3, two examples of determining an input open-circuit fault for an MLPE apparatus 102 are provided below.

In a first example, multiple rounds of regulation may be simultaneously performed on the voltages of all the power supply strings 100 in the power supply branch 10, so that the voltages of the power supply strings 100 are raised in a gradient manner.

It is assumed that a power supply branch 10 includes m power supply strings 100 connected in parallel, and each of the power supply strings 100 includes n MLPE apparatuses 102 connected in series through the output terminals of the MLPE apparatuses 102. FIG. 3 shows an example in which m=2 and n=10 and each of the MLPE apparatuses 102 is configured as the optimizer shown in FIG. 2. In FIG. 3, the MLPE apparatuses 102 in one power supply string 100 (hereinafter referred to as PV1) are optimizer #1-1, optimizer #1-2, ..., and optimizer #1-10, and the MLPE apparatuses 102 in the other power supply string 100 (hereinafter referred to as PV2) are optimizer #2-1, an optimizer #2-2, ..., and optimizer #2-10.

Referring to FIG. 2, the Buck circuit in the optimizer includes: a main switching transistor S2, a freewheeling switching transistor S1, and an inductor L1. The main switching transistor S2 and the inductor L1 are connected in series in a positive branch of a power transmission branch. The connection point of the main switching transistor S2 and the inductor L1 is connected to a negative branch of the power transmission branch through the freewheeling switching transistor S1. A terminal of the main switch transistor S2 is connected to a positive electrode PV+ of an input terminal of the optimizer, and a terminal of the inductor L1 is connected to a positive electrode Out+ of an output terminal of the optimizer. An input capacitor Cᵢₙ is connected between the positive electrode PV+ and a negative electrode PV- of the input terminal of the optimizer, and an output capacitor Cₒ and a bypass switching transistor S3 are connected in parallel between the positive electrode Out+ and a negative electrode Out- of the output terminal of the optimizer. In addition, a sampling resistor R and a communication inductor L_{PLC} may be arranged in the negative branch of the power transmission branch. With the sampling resistor R, the controller 202 may perform current sampling on the optimizer. With the communication inductor L_{PLC}, the optimizer and the controller 202 may perform power line carrier (PLC) communication.

Referring to FIG. 3, it is assumed that only the optimizer #1-10 is a faulty MLPE apparatus 102, that is, an input open-circuit fault occurs for the optimizer #1-10, and all the other MLPE apparatuses 102, including the optimizer #1-1, the optimizer #1-2, ..., the optimizer #1-9, the optimizer # 2-1, the optimizer # 2-2, ..., and the optimizer # 2-10, are normal MLPE apparatuses 102. Each of the normal MLPE apparatuses 102 is inputted with a normal input voltage through the input terminal, operates in a standby mode, and outputs a predetermined voltage such as 1V in the standby mode. The faulty MLPE apparatus 102, that is, the optimizer #1-10, cannot be started up normally due to lack of power supply. In a case that the voltage of PV1 is 9V and the voltage of PV2 is 10V, the output terminal of the optimizer #1-10 bears a backflow voltage of 1V due to the PV1 and the PV2 connected in parallel.

For each of the normal MLPE apparatuses 102 in the standby mode, the normal MLPE apparatus 102 may receive a stepped voltage limiting activation instruction and then slowly increase an output voltage of the normal MLPE apparatus 102 to a target voltage.

The stepped voltage limiting activation instruction may be transmitted by the controller 202 or by another controller communicatively connected to the controller 202, which is not limited herein. In addition, the stepped voltage limiting activation instruction may include multiple voltage limiting activation signals for regulating a voltage of an object receiving the instruction. Examples are provided as follows.

In a first round of regulation, a voltage limiting activation signal indicating a limited voltage of 10V is simultaneously transmitted to all the MLPE apparatuses 102 in PV1 and PV2, so that the output voltages of all the normal MLPE apparatuses 102 are increased by 9V. After the voltage data becomes stable, the voltage of PV1 is 90V, the voltage of PV2 is 100V, and an inter-string voltage difference of 10V is generated.

In a second round of regulation, a voltage limiting activation signal indicating a limited voltage of 20V is simultaneously transmitted to all the MLPE apparatuses 102 in PV1 and PV2, so that the output voltages of all the normal MLPE apparatuses 102 are increased by 10V. After the voltage data becomes stable, the voltage of PV1 is 180V, the voltage of PV2 is 200V, and an inter-string voltage difference of 20V is generated.

In a third round of regulation, a voltage limiting activation signal indicating a limited voltage of 30V is simultaneously transmitted to all the MLPE apparatuses 102 in PV1 and PV2, so that the output voltages of all the normal MLPE apparatuses 102 are increased by 10V. After the voltage data becomes stable, the voltage of PV1 is 270V, and the voltage of PV2 is 300V, and an inter-string voltage difference of 30V is generated.

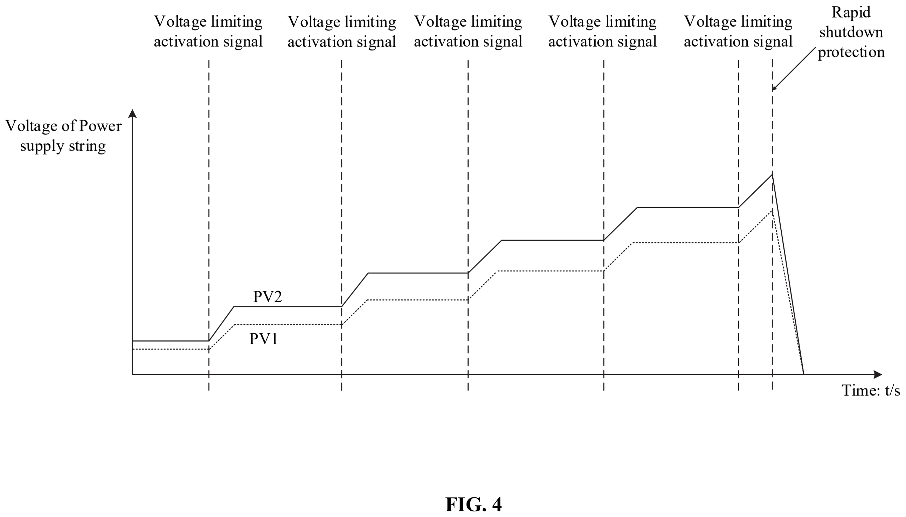

More rounds of regulation may be performed in this way, which is not described again herein. The voltage of PV1 and the voltage of PV2 change in a gradient manner as shown in FIG. 4.

The inter-string voltage difference generated in each round of regulation is applied to the faulty MLPE apparatus 102, that is, the optimizer #1-10. The output voltage of the optimizer #1-10 is transmitted reversely to the input terminal of the optimizer #1-10 through the Buck circuit, thus the input voltage of the optimizer #1-10 is equal to the output voltage of the optimizer #1-10. Therefore, the input voltage of the optimizer #1-10 changes in a gradient manner, then it may be determined that the input terminal of the optimizer is in an open-circuit state, that is, an input open-circuit fault occurs.

In an embodiment, the controller 202 may poll current input voltages of all the MLPE apparatuses 102, compare, after voltage data becomes stable, the current input voltages with the input voltages before the current round of voltage rise, and determine whether an input voltage of an MLPE apparatus 102 increases with the voltage of the power supply string 100 increased step by step. In a case that the input voltage of the MLPE apparatuses 102 increases with the voltage of the power supply string 100 step by step, it indicates that an input open-input fault occurs for the MLPE apparatus 102.

In this example, the voltages of the power supply strings 100 are raised step by step, the input voltages of the MLPE apparatuses 102 are polled in each round of voltage raising, and it may be determined that an input open-input fault occurs for an MLPE apparatus 102 in a case that the input voltage of the MLPE apparatus 102 increases step by step. In addition, the MLPE apparatuses 102, without performing any active operation, are passively regulated to determine whether an input open-input fault occurs.

In a second example, it is assumed that the power supply strings 100 include the same number of faulty MLPE apparatuses 102. In a case of raising the voltages of the power supply strings 100 in the gradient manner which is described in the first example, the inter-string voltage difference to not be generated between the power supply strings 100, and thus the faulty MLPE apparatus 102 cannot be determined. Multiple rounds of one-by-one control may be performed on all the power supply strings 100 in the power supply branch 10, so that the voltages of the power supply strings 100 are raised in an alternating gradient manner.

Taking the structure shown in FIG. 3 as an example, it is assumed that the optimizer #1-10 in PV1 and the optimizer #2-10 in PV2 are faulty MLPE apparatuses 102, and all the other MLPE apparatuses 102, including the optimizer #1-1, the optimizer #1-2, ..., the optimizer #1-9, the optimizer #2-1, the optimizer #2-2, ..., and the optimizer #2-9 are normal MLPE apparatuses 102. Each of the normal MLPE apparatuses 102 is inputted with a normal input voltage through the input terminal, operates in a standby mode, and outputs a predetermined voltage such as 1V in the standby mode. The faulty MLPE apparatuses 102, that is, the optimizer #1-10 and the optimizer #2-10, cannot be started up normally due to lack of power supply. In a case that the voltage of PV1 is 9V and the voltage of PV2 is 9V, the output terminal of the optimizer #1-10 and the output terminal of the optimizer #2-10 bear no backflow voltage.

For each of the normal MLPE apparatuses 102 in the standby mode, the normal MLPE apparatus 102 may receive a stepped voltage limiting activation instruction and then slowly increase an output voltage of the normal MLPE apparatus 102 to a target voltage. In each round of voltage regulation, the voltages of the power supply strings 100 are raised one by one. Therefore, in each round of voltage regulation, it is required to raise voltages of different power supply strings 100 by different voltage values to ensure that an inter-string voltage difference is generated in the round of voltage regulation. Examples are provided as follows.

In a first round of regulation, a voltage limiting activation signal indicating a limited voltage of 2V is transmitted to all MLPE apparatuses 102 in one of PV1 and PV2, such as PV1, so that the output voltages of all the normal MLPE apparatuses 102 in PV1 are increased by 1V. After voltage data becomes stable, the voltage of PV1 is 18V, the voltage of PV2 remains at 9V, and an inter-string voltage difference of 9V is generated. Then, a voltage limiting activation signal indicating a limited voltage of 4V is transmitted to all the MLPE apparatuses 102 in the other one of PV1 and PV2, such as PV2, so that the output voltages of all the normal MLPE apparatuses 102 in PV2 are increased by 3V. After voltage data becomes stable, the voltage of PV1 is 18V, the voltage of PV2 is 36V, and an inter-string voltage difference of 18V is generated.

In a second round of regulation, a voltage limiting activation signal indicating a limited voltage of 7V is transmitted to all the MLPE apparatuses 102 in PV1, so that the output voltages of all the normal MLPE apparatuses 102 in PV1 are increased by 5V. After voltage data becomes stable, the voltage of PV1 is 63V, the voltage of PV2 is still 36V, and an inter-string voltage difference of 27V is generated. Then, a voltage limiting activation signal indicating a limited voltage of 11V is transmitted to all the MLPE apparatuses 102 in PV2, so that the output voltages of all the normal MLPE apparatuses 102 in PV2 are increased by 7V. After voltage data becomes stable, the voltage of PV1 is still 63V, the voltage of PV2 is 99V, and an inter-string voltage difference of 36V is generated.

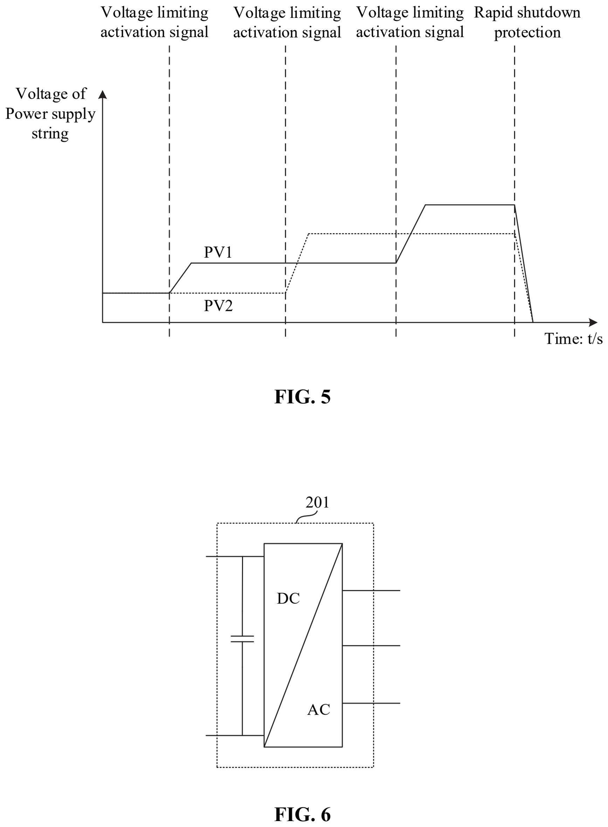

More rounds of regulation may be performed in this way, which is not described again herein. The voltage of PV1 and the voltage of PV2 change in an alternating gradient manner as shown in FIG. 5.

In each of regulations in each round, an inter-string voltage difference is generated and is applied to a faulty MLPE apparatus 102 (that is, the optimizer #1-10 or the optimizer #2-10) in a power supply string 100 having a lower voltage, so that the input voltage of the faulty MLPE apparatus 102 changes with the output voltage of the faulty MLPE apparatus 102. Thus, the input voltage of the optimizer #1-10 and the input voltage of the optimizer #2-10 alternately change step by step.

The controller 202 may poll current input voltages of all the MLPE apparatuses 102, compare, after voltage data becomes stable, the current input voltages with the input voltages before the current round of voltage rise, and determine whether an input voltage of an MLPE apparatus 102 increases with the voltage of the power supply string 100 increased step by step. In a case that the input voltage of the MLPE apparatuses 102 increases with the voltage of the power supply string 100 step by step, it indicates that an input open-input fault occurs for the MLPE apparatus 102.

This example is still applicable to multiple power supply strings 100 each of which includes the same number of faulty MLPE apparatus 102, and the faulty MLPE apparatus 102 in the power supply strings 100 may be determined respectively.

It should be noted that in the above descriptions, the predetermined manner is explained by taking PV1-PV2-PV1-PV2 as an example in a case of m=2. In practice, other predetermined manners may be applied in the case of m=2, such as PV1-PV1-PV2-PV2 or PV1-PV2-PV2-PV1, which are not repeated herein and fall within the protection scope of the present disclosure.

In addition, the above two examples merely exemplify the process of determining the input open-circuit fault. In practice, various predetermined manners may be provided, and m is not limited to 2. In a case of m>2, the regulation may be performed on y objects, where y may be less than or equal to m, or y may be equal to 1. In a case of y=1, the predetermined manner may include performing one round of regulation or performing at least two rounds of regulation, and voltages are only regulated once in each round of regulation. The predetermined manner may be determined according to application environments as long as the inter-string voltage difference can be generated, which falls within the protection scope of the present disclosure.

Based on the above embodiments, a structure of the power converter 20 is described in detail in an embodiment. For example, the main circuit 201 of the power converter 20 may include a direct-current/alternating-current (DC/AC) converter, as shown in FIG. 6. A DC side of the DC/AC converter is connected to the DC side of the main circuit 201, and an AC side of the DC/AC converter is connected to an AC side of the main circuit 201. The DC/AC converter may have various topologies, which may refer to the conventional technology and is not repeated herein. In practice, the DC side of the main circuit 201 may be arranged with a capacitor and the AC side of the main circuit 201 may be arranged with a filtering circuit (not shown in FIG. 6), which may refer to the conventional technology and is not repeated herein.

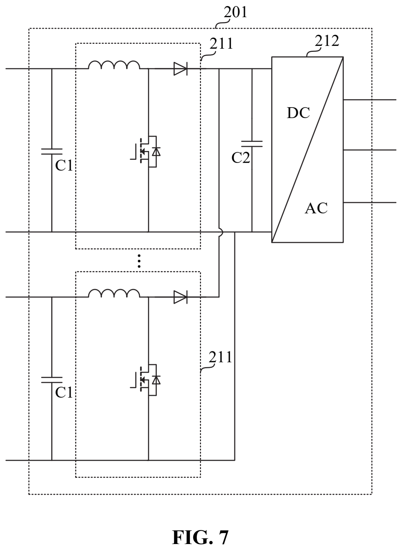

Alternatively, the main circuit 201 may include a DC/AC converter 212 and at least one DC/DC converter 211, as shown in FIG. 7. An input terminal of the DC/DC converter 211 is connected to a terminal at the DC side of the main circuit 201, and an output terminal of the DC/DC converter 211 is connected to a DC side of the DC/AC converter 212. An AC side of the DC/AC converter is connected to an AC side of the main circuit 201. The DC/DC converter 211 may have a topology according to the conventional technology, and is not limited to the Boost circuit shown in FIG. 7. In practice, the input terminal of the DC/DC converter 211 may further be arranged with a filtering capacitor C1 for performing an electromagnetic interference (EMI) filtering function. A bus capacitor C2 may be arranged between a positive electrode and a negative electrode at the DC side of the DC/AC converter 212. In a case of arranging more than one DC/DC converter 211, output terminals of the DC/DC converters 211 may be connected to the DC side of the DC/AC converter 212 via a DC bus, and input terminals of the DC/DC converters 211 may be connected to corresponding power supply branches 10.

In a case that the DC power supply 101 is a photovoltaic module, the power converter 20 may serve as a photovoltaic inverter. In a case that the DC power supply 101 is an energy storage battery, the power converter 20 may serve as an energy storage inverter. Further, in the case that the DC power supply 101 is the photovoltaic module, the power converter 20 may be connected to an energy storage system including at least one energy storage battery; and in the case that the DC power supply 101 is the energy storage battery, the power converter 20 may be connected to a photovoltaic system including at least one photovoltaic module. The two types of power supplies in the above cases may be coupled through the DC bus of the power converter 20, and the specific structure may refer to the conventional technology and is not repeated herein.

Further, the controller 202 in the power converter 20, after determining an MLPE apparatus 102 having an input open-circuit fault, may perform one of the following operations.
(1) A rapid shutdown protection is performed on the faulty MLPE apparatus 102.

In a case that the MLPE apparatuses 102 are shutdown devices, a rapid shutdown protection may be performed on the faulty MLPE apparatus 102 by turning off a switch in the faulty MLPE apparatus 102. In a case that the MLPE apparatuses 102 are optimizers, a rapid shutdown protection may be performed on the faulty MLPE apparatus 102 by turning off a main switching transistor (such as S2 shown in FIG. 2) in the faulty MLPE apparatus 102.

It should be noted that after performing the rapid shutdown protection on the faulty MLPE apparatus 102, in a case that the number of the normal MLPE apparatuses 102 in the power supply string 100 where the faulty MLPE apparatus 10 is arranged is different from the number of the normal MLPE apparatuses 102 in other power supply strings 100 connected in parallel to the power supply string 100, the normal MLPE apparatuses 102 in the power supply string 100 and the normal MLPE apparatuses 102 in the other power supply strings 100 may be controlled to output different voltages, so that the voltages of the power supply strings 100 connected in parallel in the same power supply branch 10 are similar, ensuring subsequent operations of the system.

(2) A rapid shutdown protection is performed on the power supply string 100 where the faulty MLPE apparatus 102 is arranged.

In a case that the MLPE apparatuses 102 are shutdown devices, a rapid shutdown protection may be performed on the power supply string 100 where the faulty MLPE apparatus 102 is arranged by turning off switches in all the MLPE apparatuses 102 in the power supply string 100. In a case that the MLPE apparatuses 102 are optimizers, a rapid shutdown protection may be performed on the power supply string 100 where the faulty MLPE apparatus 102 is arranged by turning off main switching transistors (such as S2 shown in FIG. 2) in all the MLPE apparatus 102 in the power supply string 100. Then, other power supply strings 100 operate normally.

(3) A rapid shutdown protection is performed on the power supply branch 10 where the faulty MLPE apparatus 102 is arranged.

For example, for the structure shown in FIG. 7, the input terminals of the DC/DC converters 211 may be connected to corresponding power supply branches 10 through switches. After determining the faulty MLPE apparatus 102, a switch through which the power supply branch 10 where the faulty MLPE apparatus 102 is arranged is connected to the corresponding DC/DC converter 211 may be turned off, thereby performing the rapid shutdown protection on the power supply branch 10. As shown in FIG. 4 and FIG. 5, after determining the faulty MLPE apparatus 102 in the power supply branch 10, the rapid shutdown protection may be performed on the power supply branch 10, and then the power converter 20 and the other power supply branches 10 still operate normally.

(4) Warning information is generated and outputted.

After determining the faulty MLPE apparatus 102, warning information may be generated and outputted, so that the operation and maintenance personnel may obtain the position of the faulty MLPE apparatus 102, facilitating subsequent operations and maintenance.

In addition, after outputting the warning information, the controller 202 may perform a fault shutdown on the power converter 20 for facilitating the operation and maintenance personnel performing operation and maintenance, and then restart the power converter 20 after performing operation and maintenance; or the controller 202 may control the main circuit 201 and the other power supply strings 100 to operate normally, and the operation and maintenance personnel may perform operation and maintenance after a normal shutdown. The above operations may be performed according to application environments, and fall within the protection scope of the present disclosure.

In practice, a determination condition for determining an input open-circuit fault may be configured for the controller 202. For example, in the voltage regulation processes in the above embodiments, it may be determined that an MLPE apparatus 102 has an input open-circuit fault on detecting that the input voltage of the MLPE apparatus 102 changes z times, where z may be any positive integer. That is, in the above two examples, it may be determined that an MLPE apparatus 102 has an input open-circuit fault on detecting that the MLPE apparatus 102 is disconnected to the corresponding power supply in each round of voltage rise step by step, then the rapid shutdown protection is performed, and the warning information is generated and outputted. FIG. 4 shows an example in which z=4, and FIG. 5 shows an example in which z=2.

Taking PLC communication as an example, a signal interaction process between the controller 202 in the power converter 20 and MLPE apparatuses 102 is described below.

In regulating a voltage of at least one power supply string 100, the controller 202 may transmit an output voltage regulation signal to all MLPE apparatuses 102 in the power supply string 100 in a broadcast manner through the circuit shown in FIG. 1. The output voltage regulation signal may have a regular waveform, which is not limited herein. In a case that the MLPE apparatuses 102 are optimizers, the output voltage regulation signal may include the voltage limiting activation signal described in the above embodiments. In a case that the MLPE apparatuses 102 are shutdown devices, the output voltage regulation signal may include a signal for controlling switches in the MLPE apparatuses 102 to be turned on or turned off. In addition, the output voltage regulation signal may further include a device code of the power supply string 100 of which the voltage is to be regulated, so that each the MLPE apparatuses 102 may determine whether to respond to the output voltage regulation signal based on the device code. Only an MLPE apparatus 102 in the power supply string 100 having a device code same as the device code included in the output voltage regulation signal is required regulate an output voltage in response to the output voltage regulation signal.

In practice, the controller 202 may transmit output voltage regulation signals multiple times. In the output voltage regulation signals, the device codes may be the same or different, and limited voltages in the voltage limit activation signals may be the same or different, so that the voltages of the corresponding power supply strings 100 may be changed in the above-described predetermined manner. For example, in a case that the controller 202 simultaneously performs multiple rounds of regulation on the voltages of all the power supply strings 100, the controller 202 may transmit output voltage regulation signals including the same device code and different limited voltage multiple times; and in a case that the controller 202 performs multiple rounds of one-by-one regulation on the voltages of all the power supply strings 100, the controller 202 may transmit output voltage regulation signals multiple times in which at least one of the device code and the limited voltage is different. Detailed descriptions may refer to the above embodiments and are not repeated herein.

After receiving the output voltage regulation signals, an MLPE apparatus 102 not having the input open-circuit fault may change the output voltage of the MLPE apparatus 102, and an output voltage of an MLPE apparatus 102 having the input open-circuit fault may be determined based on a corresponding inter-string voltage difference. In addition, the input voltage of the MLPE apparatus 102 not having the input open-circuit fault is almost constant at an voltage of a DC power supply 101 connected to the MLPE apparatus 102, and the input voltage of the MLPE apparatus 102 having the input open-circuit fault changes with the output voltage of the MLPE apparatus 102.

To acquire the input voltages of the MLPE apparatuses 102, the controller 202 may transmit an inquiry signal to the MLPE apparatuses 102 in a broadcast manner. The inquiry signal may include the device code of the power supply string 100 of which the voltage is to be regulated, so that each of the MLPE apparatuses 102 may determine whether to respond to the inquiry signal based on the device code. In an embodiment, after determining to respond to the inquiry signal, an MLPE apparatus 102 may upload an input voltage sampling signal in a time window. Then, the controller 202 may analyze the input voltage sampling signal and acquire the input voltage of the MLPE apparatus 102, and then determines that an input open-circuit fault occurs for the MLPE apparatus 102 after determining that the input voltage of the MLPE apparatus 102 changes.

Alternatively, in a case that an MLPE apparatus 102 is configured with a determination function, the MLPE apparatus 102 may directly determine whether the input voltage of the MLPE apparatus 102 changes, generates an indication signal, and transmits the indication signal. Then, the controller 202 analyzes the indication signal. In a case that the indication signal indicates that the input voltage of the MLPE apparatus 102 changes, the controller 202 determines that the MLPE apparatus 102 has an input open-circuit fault.

In practice, the input voltage sampling signal and the indication signal may have regular waveforms, which is not limited herein and falls within the protection scope of present disclosure, as long as the controller 202 may acquire corresponding information.

In the embodiments, the data interaction process between the controller 202 and the MLPE apparatuses 102 is briefly described, and other communication processes may refer to the conventional technology. All the data interaction processes, based on which the controller 202 may transmit an output voltage regulation signal at least once and regulate the voltage of the power supply string 100, fall within the protection scope of the present disclosure.

A control method for a power converter is further provided according to an embodiment of the present disclosure. A direct-current (DC) side of the power converter is connected to at least one power supply branch. The at least one power supply branch includes at least two power supply strings connected in parallel. Each of the at least two power supply strings includes: at least two module-level power electronics (MLPE) apparatuses and DC power supplies. The at least two MLPE apparatuses are connected in series through output terminals of the MLPE apparatuses, and the DC power supplies are connected to input terminals of the MLPE apparatuses. The connections between the components may refer to the above embodiments and are not repeated herein.

The control method may be performed by a controller in the power converter, or may be performed by another controller communicatively connected to the controller, such as an on-site handheld terminal, a mobile phone, or a computer communicatively connected to the controller directly or through a cloud server, which is determined according to the application environments and is not limited herein.

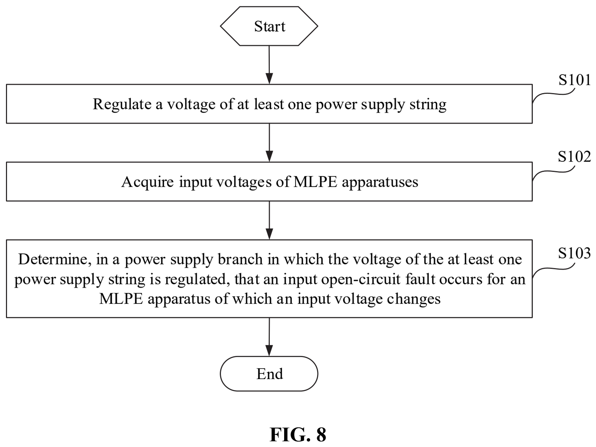

Referring to FIG. 8, the control method includes the following steps S101 to S103.

In step S101, a voltage of at least one of the power supply strings is regulated.

The voltage of the at least one of the power supply strings may be regulated by: regulating voltages of all or part of the power supply strings in the power supply branch in a predetermined manner. The voltage of the at least one of the power supply strings may be regulated by raising or reducing the voltage of the at least one of the power supply strings, which is not limited herein.

The predetermined manner may include a simultaneous regulation manner, a batch regulation manner, or a one-by-one regulation manner. Alternatively, the predetermined manner may include: performing at least two rounds of regulation.

In addition, the voltages of all or part of the power supply strings in the power supply branch are regulated in the predetermined manner may include: simultaneously performing a same regulation on output voltages of all MLPE apparatuses in the power supply strings in the predetermined manner to cause the voltages of the power supply strings to change.

The detailed operations may refer to the above embodiments and are not repeated herein.

In step S102, input voltages of the MLPE apparatuses are acquired.

The input voltages of the MLPE apparatuses may be acquired by: polling the input voltages of the MLPE apparatuses through communication processes. The communication processes may be determined according to actual situations and are not limited herein.

In step S103, it is determined, in a power supply branch in which the voltage of the at least one of the power supply strings is regulated, that an input open-circuit fault occurs for an MLPE apparatus of which an input voltage changes.

The step S103 may include: determining, in the power supply branch in which the voltage of the at least one of the power supply strings is regulated, the input open-circuit fault occurs for an MLPE apparatus of which an input voltage changes regularly with the regulated voltage of the corresponding power supply string. By determining the regular change, misjudgment can be avoided, and the accuracy of determining fault can be improved.

Alternatively, the step S103 may include: determining, in the power supply branch in which the voltage of the at least one of the power supply strings is regulated, the input open-circuit fault occurs for an MLPE apparatus of which an input voltage changes at least once. That is, as long as an input voltage of an MLPE apparatus changes once, it may be determined that the MLPE apparatus has an input open-circuit fault. For example, in the alternating gradient manner described in the above embodiments, an input voltage of a faulty MLPE apparatus may change due to a voltage regulation in each round of voltage regulation. Therefore, a faulty MLPE apparatus may be determined in each voltage regulation, avoiding misdeterminations and improve system security.

As described in the above embodiments, for the determined MLPE apparatus having an input open-circuit fault, the input voltage of the MLPE apparatus may increases or decreases, which is not limited herein and falls within the protection scope of the present disclosure.

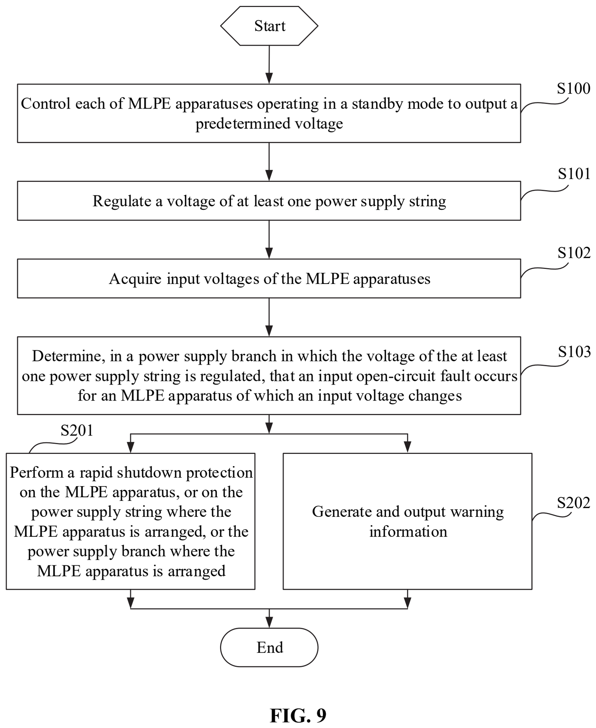

Further, after the step S103, the control method may further include the following steps S201 and/or S202 as shown in FIG. 9.

In step S201, a rapid shutdown protection is performed on the MLPE apparatus, or on the power supply string where the MLPE apparatus is arranged, or the power supply branch where the MLPE apparatus is arranged.

In step S202, warning information is generated and outputted.

Detailed descriptions of the rapid shutdown protection and the warning process may refer to the above embodiments, and are not repeated herein.

Further, in the control method, before performing the step S101, the following step S100 shown in FIG. 9 may be performed.

In step S100, each of the MLPE apparatuses operating in a standby mode is controlled to output a predetermined voltage.

The predetermined voltage may be 1V or other smaller values, which may be determined according to requirements of application environments and falls within the protection scope of the present disclosure.

According to the control method for a power converter in the embodiments of the present disclosure, the voltage of at least one power supply string is regulated, and then it is determined whether the input voltages of the MLPE apparatuses in the corresponding power supply branches change. In a case that an input voltage of an MLPE apparatus changes, it may be determined that the MLPE apparatus has an input open-circuit fault, thereby determining the input open-circuit fault. In addition, protection and warning may be timely performed according to actual requirements.

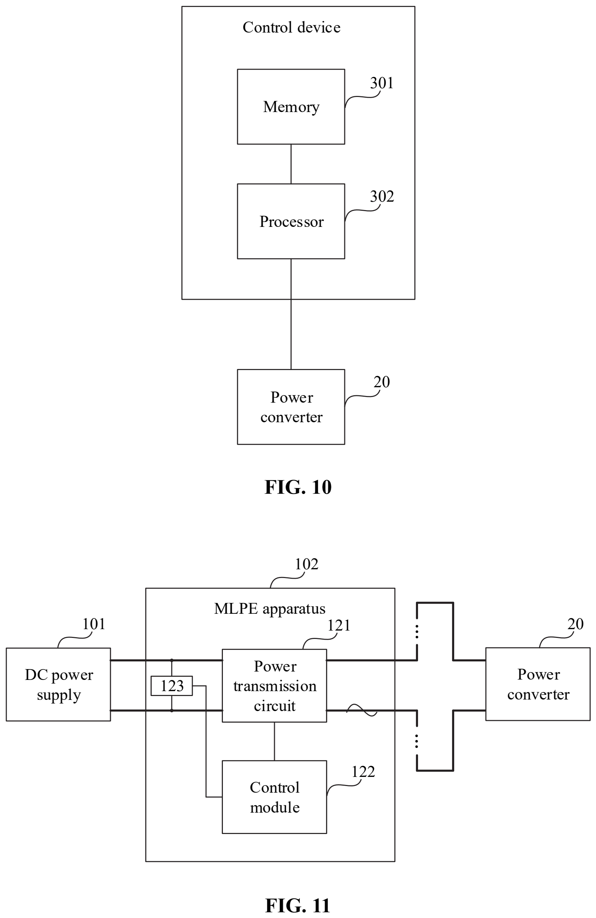

A control device is further provided according to an embodiment of the present disclosure. As shown in FIG. 10. The control device may include a memory 301 and a processor 302. The processor 302 may be connected to a power converter 20, and may be configured to drive a power switching transistor in a main circuit of the power converter 20.

The memory 301 may be a random access memory (RAM), a flash memory, a read only memory (ROM), an erasable programmable ROM (EPROM, which is a non-volatile ROM), a register, a hard disk, a removable magnetic disk, and the like.

The memory 301 stores computer instructions. The computer instructions stored in the memory 301, in response to executed by the processor 302, cause the processor 302 to perform the control method for a power converter. The memory 301 may further store data, such as the predetermined manner and other information described in the above embodiments.

In the above embodiments, the solutions may be fully or partially implemented by software, hardware, firmware or any combination thereof. In a configuration of being implemented by using software, the solutions may be fully or partially implemented in a form of a computer program product. The computer program product includes one or more computer instructions. In a configuration that the computer program instructions are loaded and executed on a computer, all or part of the processes or functions described in the embodiments of the present disclosure are generated. The computer may be a general-purpose computer, a special-purpose computer, a computer network, or other programmable devices. The computer instructions may be stored in a computer-readable storage medium, or may be transmitted from a computer-readable storage medium to another computer-readable storage medium. For example, the computer instructions may be transmitted from a website site, a computer, a server or a data center to another website site, another computer, another server or another data center in a wired manner (for example, through a coaxial cable, an optical fiber, and a digital subscriber line (DSL)) or in a wireless manner (for example, through infrared, radio, microwave and the like). The computer-readable storage medium may be any available medium that a computer may access, or may be a data storage device such as a server and a data center that integrates one or more available medium. The available medium may be a magnetic medium, such as a floppy disk, a hard disk, and a magnetic tape. Alternatively, the available medium may be a semiconductor medium, such as a solid state disk (SSD). The available medium may be other medium, which is not limited herein.

A computer-readable storage medium is further provided according to an embodiment of the present disclosure. The computer-readable storage medium stores a computer program. The computer program is loaded by a processor to perform the control method for a power converter according to the above embodiments.

That is, the computer-readable storage medium stores the method or an algorithm according to the above embodiments. In an embodiment, the computer-readable storage medium may be a RAM, a flash memory, a ROM, an EPROM, a register, a hard disk, a removable magnetic disk or any other form of storage medium in the art.

A module-level power electronics (MLPE) apparatus is further provided according to an embodiment of the present disclosure. As shown in FIG. 11, the MLPE apparatus 102 includes: a power transmission circuit 121, a control module 122 and a voltage sampling module 123.

An input terminal of the power transmission circuit 121 serves as an input terminal of the MLPE apparatus 102, and is connected to at least one DC power supply 101. FIG. 11 shows an example of connecting the input terminal of the MLPE apparatus 102 to a DC power supply 101. An output terminal of the power transmission circuit 121 serves as an output terminal of the MLPE apparatus 102, and is connected in series with output terminals of other MLPE apparatuses 102 and then is connected to the DC side of the power converter 20. The power transmission circuit 121 is configured to be controlled by the control module 122.

In practice, in a case, the power transmission circuit 121 may include a switch arranged in a positive transmission branch and/or a switch arranged in a negative transmission branch, and the switches are controlled by the control module 122 to be turned on or turned off. In this case, the MLPE apparatus 102 is a shutdown device. In another case, the MLPE apparatus 102 may be an optimizer. In this case, and the power transmission circuit 121 is implemented using a DC/DC conversion circuit, such as the Buck circuit shown in FIG. 2. Not limited to the Buck circuit, for example, the power transmission circuit may be implemented by one or more of a Boost circuit, a Buck-Boost circuit, a forward circuit, a flyback circuit, and the like. The above descriptions merely illustrate examples of the topology structure of the power transmission circuit in the MLPE apparatus 102, and other circuit topology structures in the conventional technology also fall within the protection scope of the present disclosure.

The voltage sampling module 123 is configured to sample an input voltage of the MLPE apparatus 102, and transmit a sampling result to the control module 122.

The control module 122 is communicatively connected to the power converter 20. The control module 122 and the power converter 20 may communicate through PLC, that is, in a communication mode in which a power line is used as a transmission channel to transmit an analog signal or a digital signal at a high speed through a carrier. This communication mode may be widely applied to an intelligent monitoring system of new energy power stations such as photovoltaic power stations. In this communication mode, communication may be performed through the power lines without arranging communication cables, facilitating network deployment, achieving short construction period, low cost and high reliability, providing a communication speed meeting the system requirements, and thereby providing a cost-effective data communication platform for the intelligent monitoring system. In practice, the control module 122 may be communicatively connected to the power converter 20 through RS485, zigbee, sub-1G or the like, which is determined according to the application environments and falls within the protection scope of the present disclosure. The specific communication modes and principles between the control module 122 and the power converter 20 may refer to the conventional technology and are not repeated herein.

As described in the above embodiments, the power converter 20 may regulate the output voltages of MLPE apparatuses 102 to control the voltage of the corresponding power supply string 100. In practice, the power converter 20 may transmit an output voltage regulation signal to the control module 122 to regulate the output voltage of the MLPE apparatus 102. The output voltage regulation signal may have a regular waveform, which is not limited herein, as long as the control module 122 may determine to regulate the output voltage of the MLPE apparatus 102 based on the output voltage regulation signal. In practice, the control module 122 may obtain a specific voltage value to which the output voltage of the MLPE apparatus 102 is to be regulated based on the output voltage regulation signal. For example, in a case that MLPE apparatus 102 is an optimizer, the output voltage regulation signal may include the voltage limiting activation signal described in the above embodiments. In addition, the output voltage regulation signal may further include the device code described in the above embodiments, so that the control modules 122 may determine whether to respond to the output voltage regulation signal. The content and transmission frequency of the output voltage regulation signal may refer to the above embodiments and are not repeated herein.

After receiving the output voltage regulation signal, the control module 122 may control the power transmission circuit 121 to operate based on the output voltage regulation signal. For example, the control module 122 may control a switch in the shutdown device to be turned on or turned off, or control a DC/DC conversion circuits in the optimizer to adjust a duty ratio of a switching transistor in the optimizer, thereby regulating the output voltage of the MLPE apparatus 102 to meet the requirement of the output voltage regulation signal.

In a case that the input terminal of an MLPE apparatus 102 is normally connected to a corresponding DC power supply 101, that is, the MLPE apparatus 102 does not have an input open-circuit fault, the control module 122 may control the power transmission circuit 121 to operate to regulate the output voltage of the MLPE apparatus 102 to meet the requirement of the output voltage regulation signal. The input voltage of the MLPE apparatus 102 is to be the same as the voltage of the DC power supply 101 to which the MLPE apparatus 102 is connected, that is, the input voltage of the MLPE apparatus 102 is maintained at an original voltage before the power transmission circuit 121 operates, or is maintained at a voltage similar to the original voltage, for example, within a normal fluctuation range of the original voltage.

In a case that the input terminal of the MLPE apparatus 102 is disconnected from a corresponding DC power supply 101, that is, the MLPE apparatus 102 has an input open-circuit fault, the control performed on the power transmission circuit 121 by the control module 122 is ineffective, and the output voltage of the MLPE apparatus 102 is determined based on the inter-string voltage difference described in the above embodiments. That is, if the power supply string 100 where the MLPE apparatus 102 is arranged has a low voltage and only the MLPE apparatus 102 has an input open-circuit fault, the output voltage of the MLPE apparatus 102 is equal to the inter-string voltage difference; and if the power supply string 100 where the MLPE apparatus 102 is arranged has a low voltage and other MLPE apparatuses 102, in addition to the MLPE apparatus 102, have an input open-circuit fault, the output terminals of the MLPE apparatuses 102 share the inter-string voltage difference. In addition, the input voltage of the MLPE apparatus 102 is similar to the output voltage of the MLPE apparatus 102. That is, the input voltage of the MLPE apparatus 102 changes significantly from an original input voltage of the MLPE apparatus 102, for example, the change difference may be greater than a predetermined threshold corresponding to the normal fluctuation range described in the above embodiments.

After acquiring a sampling result of the input voltage of the MLPE apparatus 102 by the voltage sampling module 123, the control module 122 may respond to an inquiry signal of the power converter 20 and transmit an input voltage sampling signal of the MLPE apparatus 102 to the power converter 20, so that the power converter 20 may obtain the input voltage of the MLPE apparatus 102. The power converter 20 determines whether the input voltage of the MLPE apparatus 102 changes, and then determines that an input open-circuit fault occurs for the MLPE apparatus 102 in a case that the input voltage of the MLPE apparatus 102 changes.

Alternatively, after acquiring the sampling result, the control module 122 may directly determine whether the input voltage of the MLPE apparatus 102 changes and generate an indication signal. Then, the control module 122 transmits the indication signal to the power converter 20. In a case that the indication signal indicates that the input voltage of the MLPE apparatus 102 changes, the power converter 20 may determine that the MLPE apparatus 102 has an input open-input fault.

In practice, the input voltage sampling signal and the indication signal may have regular waveforms, which is not limited herein and falls within the protection scope of present disclosure, as long as the power converter 20 may acquire corresponding information.

In addition, signals communicated between the MLPE apparatus 102 and the power converter 20 may be received or transmitted by using a corresponding signal processing unit, such as the communication inductor L_{PLC} for receiving or transmitting the PLC communication signals shown in FIG. 2. Taking the communication inductor L_{PLC} shown in FIG. 2 as an example, the power converter 20 may transmit the output voltage regulation signal to a power line connected to the MLPE apparatus 102, so that the control module 122 may receive the output voltage regulation signal by collecting a voltage or a current of the communication inductor L_{PLC}. Then, the power converter 20 may acquire corresponding information based on a voltage feature or a current feature of the output voltage regulation signal. The MLPE apparatus 102 may transmit the input voltage sampling signal or the indication signal in a form of voltage or current to the communication inductor L_{PLC}, so that the input voltage sampling signal or the indication signal may be coupled to a power line connected to the power converter 20 through the communication inductor L_{PLC}. In this way, the power converter 20 receives the corresponding signal and analyzes the signal.

Descriptions of other structures and principles may refer to the above embodiments and are not repeated herein.

According to the embodiments of the present disclosure, the MLPE apparatus 102 communicates with the power converter 20, regulates the output voltage of the MLPE apparatus 102, and then transmits the input voltage sampling signal of the MLPE apparatus 102 or the indication signal, so that the power converter 20 may determine whether the MLPE apparatus 102 has an input open-circuit fault, and the power converter 20 may perform timely protection and warning.

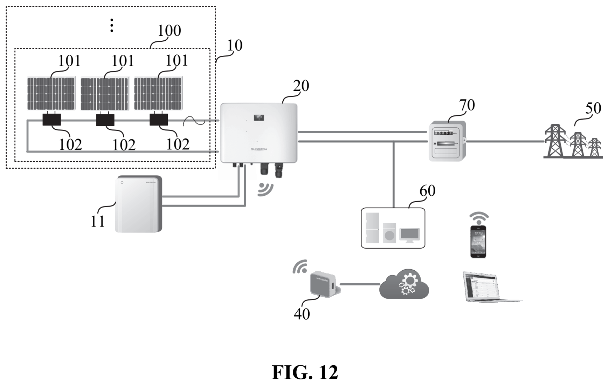

A new energy system is further provided according to an embodiment of the present disclosure. As shown in FIG. 12, the new energy system includes: a power converter 20 and multiple module-level power electronics (MLPE) apparatuses 102.

A DC side of the power converter 20 is connected to at least one power supply branch 10. The power supply branch 10 includes at least two power supply strings connected in parallel. Each of the power supply strings 10 includes: at least two MLPE apparatuses 102 connected in series through output terminals of the at least two MLPE apparatuses 102 and DC power supplies 101 connected to input terminals of the at least two MLPE apparatuses 102.

In practice, the MLPE apparatus 102 may be arranged independently or may be integrated in the DC power supply 101 connected to the input terminal of the MLPE apparatus 102, which is determined according to the application environments and falls within the protection scope of the present disclosure.

The power converter 20 is communicatively connected to the multiple MLPE apparatuses 102. Specifically, the power converter 20 may communicate with the multiple MLPE apparatuses 102 through PLC, RS485, zigbee, sub-1G, or the like, which is not repeated herein.

The power converter 20 may be the power converter 20 described in the above embodiments, and the MLPE apparatus 102 may be the MLPE apparatus 102 described in the above embodiments. Alternatively, the power converter 20 may perform the control method for a power converter 20 described in the above embodiments to determine an input open-circuit fault for an MLPE apparatus 102. Alternatively, a controller communicatively connected to the power converter 20 may perform the control method for a power converter 20 described in the above embodiments to determine an input open-circuit fault for an MLPE apparatus 102. The controller may be a handheld terminal, a mobile phone, a computer or the like on site. The handheld terminal on site may directly communicate with the power converter 20, and the mobile phone, the computer or the like may communicate with the power converter 20 through a cloud server or a communication module 40 of the new energy system, which is not limited herein and is determined according to the application environments, and falls within the protection scope of the present disclosure.

The AC side of the power converter 20 may be connected to a power grid 50 and/or a load 60. An electric meter 70 and a transformer (not shown in FIG. 12) may be arranged in a circuit connecting the power converter 20 to the power grid 50, which may refer to the conventional technology and is not limited herein.

FIG. 12 shows an example in which the power converter 20 is configured as a photovoltaic inverter. In FIG. 12, the DC power supply 101 connected to the power converter 20 is a photovoltaic module, and the DC bus of the power converter 20 may be connected to an energy storage system 11. In practice, the DC power supply 101 connected to the power converter 20 may be an energy storage battery, and the DC bus may be connected to a photovoltaic system. Various structure configurations may be determined according to the application environments, and fall within the protection scope of the present disclosure.

According to the new energy system in the embodiments of the present disclosure, an input open-circuit fault for an MLPE apparatus 102 may be determined by using the power converter 20 and the MLPE apparatus 102 described in the above embodiments or by performing the control method described in the above embodiments, and timely protection and warning may be performed.

The same or similar parts among the embodiments in this specification may be referred to each other, and each of the embodiments emphasizes differences from other embodiments. In particular, the system or the system embodiments are basically similar to the method embodiment, and therefore are described relatively briefly. For relevant details, reference may be made to the corresponding descriptions of the method embodiments. The system and the system embodiments described above are only illustrative, in which the units described as separate components may be or may not be physically separated, and the components shown as units may be or may not be physical units, that is, the components may be located in one place, or distributed over multiple network elements. Some or all of the modules may be selected as needed to achieve the purpose of the solutions of the embodiments. Those skilled in the art may understand and implement the solutions without any creative effort.

Those skilled in the art may further realize that the units and algorithm steps in the examples described in conjunction with the embodiments disclosed herein can be implemented by electronic hardware, computer software, or a combination of both. In order to clearly illustrate the interchangeability of hardware and software, the modules and steps of each example have been generally described in the above description according to their functions. Whether these functions are performed in hardware or software depends on the specific application and design constraints of the technical solutions. Those skilled in the art can implement the described functions for each particular application with different methods, which should not be regarded as departing from the scope of the present disclosure.

Based on the above description of the embodiments, features described in the embodiments may be replaced or combined with each other, so that those skilled in the art can implement or use the present disclosure. Various modifications to the embodiments are obvious to those skilled in the art, and general principles defined in the present disclosure can be implemented in other embodiments without departing from the spirit or scope of the present disclosure. Therefore, the present disclosure shall not be limited to the embodiments described herein, and conform to the widest scope consistent with the principle and novelty disclosed in this specification.

## Claims

1. A power converter, comprising: a main circuit and a controller, **characterized in that**:
a direct-current (DC) side of the main circuit serves as a DC side of the power converter and is connected to at least one power supply branch, wherein the at least one power supply branch comprises at least two power supply strings connected in parallel, each of the at least two power supply strings comprises at least two module-level power electronics (MLPE) apparatuses and DC power supplies, the at least two MLPE apparatuses are connected in series through output terminals of the at least two MLPE apparatuses, and the DC power supplies are connected to input terminals of the at least two MLPE apparatuses; and
the main circuit is configured to be controlled by the controller, and the controller is configured to: regulate a voltage of at least one of the power supply strings, and determine that an input open-circuit fault occurs for an MLPE apparatus of which an input voltage changes in the at least one power supply branch.

2. The power converter according to claim 1, wherein the controller is configured to regulate voltages of all or part of the power supply strings in the power supply branch in a predetermined manner.

3. The power converter according to claim 2, wherein the predetermined manner comprises: a simultaneous regulation manner, a batch regulation manner, or a one-by-one regulation manner; or the predetermined manner comprises: performing at least two rounds of regulation.

4. The power converter according to any one of claims 1 to 3, wherein the voltage of the at least one of the power supply strings is regulated by raising or reducing the voltage of the at least one of the power supply strings.

5. The power converter according to any one of claims 1 to 3, wherein the controller is configured to simultaneously perform a same regulation on output voltages of all MLPE apparatuses in the power supply strings to cause the voltages of the power supply strings to change.

6. The power converter according to any one of claims 1 to 3, wherein for the MLPE apparatus of which the input voltage changes, the input voltage of the MLPE apparatus increases or decreases.

7. The power converter according to any one of claims 1 to 3, wherein for the MLPE apparatus of which the input voltage changes, the input voltage of the MLPE apparatus changes regularly with the regulated voltage of the corresponding power supply string.

8. The power converter according to any one of claims 1 to 3, wherein the controller is configured, after determining an input open-circuit fault occurs for an MLPE apparatus, to perform a rapid shutdown protection on the MLPE apparatus, or on a power supply string or a power supply branch where the MLPE apparatus is arranged, and/or to generate and output warning information.

9. A control method for a power converter, wherein a direct-current (DC) side of the power converter is connected to at least one power supply branch, the at least one power supply branch comprises at least two power supply strings connected in parallel, each of the at least two power supply strings comprises: at least two module-level power electronics (MLPE) apparatuses and DC power supplies, the at least two MLPE apparatuses are connected in series through output terminals of the at least two MLPE apparatuses, and the DC power supplies are connected to input terminals of the at least two MLPE apparatuses, wherein the control method is **characterized in**::
regulating a voltage of at least one of the power supply strings;
acquiring input voltages of the MLPE apparatuses; and
determining, in a power supply branch in which the voltage of the at least one of the power supply strings is regulated, that an input open-circuit fault occurs for an MLPE apparatus of which an input voltage changes.

10. The control method for a power converter according to claim 9, wherein the regulating a voltage of at least one of the power supply strings comprises:
regulating voltages of all or part of the power supply strings in the power supply branch in a predetermined manner.

11. The control method for a power converter according to claim 10, the predetermined manner comprises: a simultaneous regulation manner, a batch regulation manner, or a one-by-one regulation manner; or the predetermined manner comprises: performing at least two rounds of regulation.

12. The control method for a power converter according to claim 10, wherein the regulating voltages of all or part of the power supply strings in the power supply branch in a predetermined manner comprises:
simultaneously performing a same regulation on output voltages of all MLPE apparatuses in the power supply strings in the predetermined manner to cause the voltages of the power supply strings to change.

13. The control method for a power converter according to any one of claims 9 to 12, the voltage of the at least one of the power supply strings is regulated by raising or reducing the voltage of the at least one of the power supply strings.

14. The control method for a power converter according to any one of claims 9 to 12, wherein the determining, in a power supply branch in which the voltage of the at least one of the power supply strings is regulated, an input open-circuit fault occurs for an MLPE apparatus of which an input voltage changes comprises:
determining, in the power supply branch in which the voltage of the at least one of the power supply strings is regulated, the input open-circuit fault occurs for an MLPE apparatus of which an input voltage changes regularly with the regulated voltage of the corresponding power supply string; or
determining, in the power supply branch in which the voltage of the at least one of the power supply strings is regulated, the input open-circuit fault occurs for an MLPE apparatus of which an input voltage changes at least once.

15. The control method for a power converter according to any one of claims 9 to 12, wherein before regulating the voltage of the at least one of the power supply strings, the control method further comprises:
controlling each of the MLPE apparatuses operating in a standby mode to output a predetermined voltage.
